Europäisches Patentamt

(19) European Patent Office

Office européen des brevets

(11) Veröffentlichungsnummer: **0 204 709**
**B1**

(12) EUROPÄISCHE PATENTSCHRIFT

(45) Veröffentlichungstag der Patentschrift:
10.01.90

(51) Int. Cl.⁴: **B 01 D 47/06**, B 05 B 1/06

(21) Anmeldenummer: **85904218.6**

(22) Anmeldetag: **09.09.85**

(86) Internationale Anmeldenummer:
**PCT/CH 85/00130**

(87) Internationale Veröffentlichungsnummer:
**WO 86/02859 (22.05.86 Gazette 86/11)**

(54) VERFAHREN ZUM ENTFERNEN VON VERUNREINIGUNGEN AUS GASEN UND VORRICHTUNG ZUR DURCHFÜHRUNG DES VERFAHRENS.

(30) Priorität: 07.11.84 CH 5321/84

(43) Veröffentlichungstag der Anmeldung:
**17.12.86 Patentblatt 86/51**

(45) Bekanntmachung des Hinweises auf die Patenterteilung:
**10.01.90 Patentblatt 90/2**

(84) Benannte Vertragsstaaten:
**AT BE CH DE FR GB IT LI LU NL SE**

(56) Entgegenhaltungen:
DE-A- 1 471 612
DE-B- 1 500 594
GB-A- 311 161

**Die Akte enthält technische Angaben, die nach dem Eingang der Anmeldung eingereicht wurden und die nicht in dieser Patentschrift enthalten sind.**

(73) Patentinhaber: **Hoppeler, Walter, Obere Riedji, CH-7232 Furna (CH)**

(72) Erfinder: **BRUHIN, Erich, Tulpenweg 8, CH-6060 Sarnen (CH)**

(74) Vertreter: **Patentanwälte Schaad, Balass & Partner, Dufourstrasse 101 Postfach, CH-8034 Zürich (CH)**

## Beschreibung

Die vorliegende Erfindung betrifft ein Verfahren zum Entfernen von sowohl von gelösten als auch von ungelösten Verunreinigungen aus Gasen gemäss dem Oberbegriff von Anspruch 1.

Dem Entfernen von festen, flüssigen und gasförmigen Verunreinigungen aus Gasen kommt im Rahmen des wachsenden Umweltbewusstseins ein immer grösserer Stellenwert zu. Es sind deshalb entsprechend zahlreiche Reinigungsverfahren entwickelt worden. Nassverfahren arbeiten im allgemeinen mit einer in den Gasstrom eingesprühten, fein verteilten Waschflüssigkeit. Die Voraussetzung für die Entfernung einer Verunreinigung ist dabei, dass letztere mit mindestens einem Flüssigkeitströpfchen zusammentrifft und von letzterem aufgenommen wird. Da sogar bei einem sehr feinen Versprühen der Waschflüssigkeit immer nur ein Teil der Verunreinigungen mit den Flüssigkeitströpfchen zusammentrifft, ist die Reinigungswirkung des Sprühverfahrens systembedingt limitiert.

Ziel der vorliegenden Erfindung ist es, ein Verfahren mit verbesserter Reinigungswirkung für verunreinigte Gase vorzuschlagen.

Aufgabe der Erfindung ist es, ein Verfahren vorzuschlagen, das eine vollständige und lückenlose Berührung des verunreinigten Gases mit der Waschflüssigkeit gestattet, das also nicht die systembedingten Wirkungsgrenzen der oben genannten Art aufweist.

Die gestellte Aufgabe wird durch die Merkmale des kennzeichnenden Teils von Anspruch 1 gelöst. Bevorzugte Ausführungsformen der Erfindung bilden den Gegenstand der Ansprüche 2 bis 8.

Der auf den Flüssigkeitsfilm zugeführte verunreinigte Gasstrom wird durch die Rotationsbewegung des Flüssigkeitsfilmes bereits auf dem Zuführungsweg, vor der Berührung mit der Flüssigkeit, in Rotation versetzt. Die dabei im Gasstrom entstehenden Zentrifugalkräfte fördern die schwereren Verunreinigungen, wie feste Partikel und Flüssigkeitströpfchen, an die den Gasstrom umgebende Wand, von wo sie entfernt werden können; d.h. sie werden bereits bevor der Gasstrom den Flüssigkeitsfilm erreicht, in einer — ohne zusätzlichen Aufwand erzeugten — systembedingten Vorreinigungsstufe ausgeschieden. Der in Rotation versetzte vorgereinigte Gasstrom erreicht dann den Flüssigkeitsfilm und wälzt sich entlang dessen kontinuierlicher homogener Oberfläche im wesentlichen in Form einer Spiralströmung dem Filmrand zu. Diese Spiralströmung gewährleistet eine langdauernde und durch die Wälzbewegung vollständige, z.T. mehrfache Berührung des Gases und dadurch der Verunreinigungen mit der Flüssigkeitsoberfläche. Im wesentlichen beim Erreichen des Filmrandes, durchdringt das Gas den Flüssigkeitsfilm, der an dieser Stelle in der Art eines Filters mit unendlich kleinen Poren wirkt und dadurch alle von der Flüssigkeit aufnehmbaren, dispergierbaren, löslichen und absorbierbaren Verunreinigungen festhält. Mithin ist das erfindungsgemässe Verfahren in drei Stufen wirksam, nämlich der Vorreinigung durch Zentrifugalkraft, der Berührungsreinigung an der Filmoberfläche und der Filtrierreinigung beim Durchdringen des Flüssigkeitsfilmes. Dabei weist der rotierende Flüssigkeitsfilm eine Elastizität, in der Art einer Membrane, auf, welche Schwankungen des Zuführdruckes der Waschflüssigkeit ausgleicht.

Innerhalb der oben geschilderten, der Erfindung zugrundeliegenden, Rahmenaufgabe bestand eine abhängige Teilaufgabe darin, eine Vorrichtung zur Erzeugung des rotierenden Flüssigkeitsfilms vorzuschlagen.

Diese, von der Hauptaufgabe abhängige, Teilaufgabe wurde durch die Merkmale von Anspruch 9 gelöst.

Durch die tangentiale Zuführung der Flüssigkeit in den rotationssymmetrischen Düseninnenraum wird diese bereits an dieser Stelle in eine Rotationsbewegung versetzt, die sich entlang der Wand des Düseninnenraumes und nach Austreten der Flüssigkeit aus der trompetenartigen Austrittsöffnung, in der Rotation des Flüssigkeitsfilmes fortsetzt.

Als Waschflüssigkeit können im erfindungsgemässen Verfahren neben Wasser, das gewünschtenfalls die Filmbildung fördernde Substanzen, wie oberflächenaktive Mittel oder Polymere, enthalten kann, auch andere, auf die Verunreinigungen im Gas eingestellte Flüssigkeiten, z.B. solche, die mit Gasbestandteilen reagieren wie Alkalien enthaltende wässrige Lösungen für saure Gase, Alkalien oder lösliche Sulfide für Schwermetalle und Lösungsmittel verwendet werden.

Das erfindungsgemässe Verfahren eignet sich insbesondere zum Reinigen von Luft und Abgasen, z.B. Abluft, Klimaluft, Auspuffgasen und Prozessluft. Gleichzeitig mit dem Reinigen wird beim erfindungsgemässen Verfahren das durch einen Wasserfilm geleitete gereinigte Gas, z.B. Luft, je nach dem ursprünglichen Feuchtigkeitsgehalt befeuchtet oder entfeuchtet.

Die Erfindung wird durch die Figuren weiterveranschaulicht. Es zeigen rein schematisch:

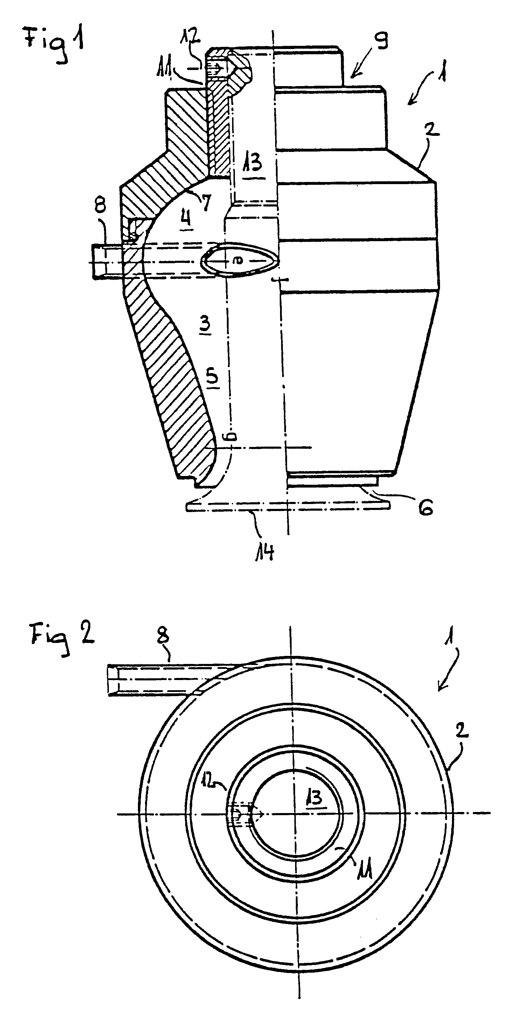

Fig. 1 die Seitenansicht einer Düse teilweise im Schnitt; und

Fig. 2 eine Draufsicht auf die Düse in Fig. 1.

Die Düse 1 in den Figuren weist einen von einem Gehäuse 2 umgebenen rotationssymmetrischen Innenraum 3 mit einem weiten ersten Bereich 4 und einem sich verjüngenden und dann auf die scharfkantige Austrittsöffnung 6 der Düse 1 trompetenartig erweiternden zweiten Bereich 5 auf. Die Wand 7 des ersten Bereiches 4 entspricht der Mantelfläche eines sich unter Druck ausbildenden Wasserwirbels, d.h. eines Rotationsellipsoids mit einer Hauptachse e und einer in der Düsenachse liegenden Nebenachse f. Die Entfernung des sich im zweiten Bereich 5 befindlichen kritischen Punktes g der Düse 1 zur Hauptachse e des Rotationsellipsoids entspricht im wesentlichen der Länge der Hauptachse e.

In den ersten Bereich 4, auf der Höhe der Hauptachse e des Rotationsellipsoids, mündet eine tangentiale Zuführleitung 8 für die Waschflüssigkeit. Der Auslassöffnung 6 gegenüber befindet sich eine weitere mit einem Gewinde versehene Öffnung 9, in der eine Gewindehülse 11 eingeschraubt ist, in der mittels eines Innengewindes und einer Klemmschraube 12 ein hohler zylindrischer Stempel 13 befestigt ist. Durch die Gewindehülse 11 und den Stempel 13 ist die Öffnung 9 dicht verschlossen. Der Stempel 13 ist auf sein sich über die Austrittsöffnung 6 hinaus erstreckendes freies Ende 14 hin erweitert. Durch Verschiebung des Stempels 13 in der Düse 1 in axialer Richtung kann die von ihm auf eine Ringform begrenzte Auslassöffnung 6, die einen Durchmesser in der Grössenordnung von einigen mm bis einigen cm aufweisen kann, erweitert oder verengt werden. Weiter kann der Stempel 13 ein (nicht dargestelltes) Befestigungselement für die Befestigung der Düse 1 am Anwendungsort aufweisen.

Im Betrieb wird die Waschflüssigkeit unter leichtem Überdruck durch die Zuführleitung tangential in den Innenraum 3 eingespeist. Die Einspeisung erfolgt in der nördlichen Hemisphäre im Uhrzeigersinn und in der südlichen Hemisphäre im Gegenuhrzeigersinn. Durch die tangentiale Einspeisung in den rotationssymmetrischen Innenraum 3 wird die Waschflüssigkeit in Rotationsbewegung versetzt und durch die dadurch erzeugte Zentrifugalkraft an die Wand 4 des Innenraumes gedrückt. Diese bereits rotierende Vorstufe des gewünschten Filmes bewegt sich auf die trompetenartige Austrittsöffnung 6 zu, wobei sie im verengten Bereich beschleunigt und gegebenenfalls im nachfolgenden Bereich auf die Austrittsöffnung zu verlangsamt wird. Während dieses Vorganges bildet die Waschflüssigkeit entlang der Wand des Innenraumes einen zusammenhängenden Flüssigkeitsfilm, der in Form eines Schirmes die Düse 1 an der scharfen Kante der Austrittsöffnung verlässt.

Eine Düse dieser Art kann auch ohne Stempel betrieben werden, wobei sich eine runde Düsenöffnung ergibt. Diese Ausführungsform wird im allgemeinen bevorzugt.

Der Durchmesser des jeweils entstehenden Flüssigkeitsfilmes wird ausser durch die räumliche Begrenzung durch die Grösse der verwendeten Düse und den Flüssigkeitsdruck bestimmt.

Vorzugsweise wird der verunreinigte Gasstrom durch mehrere, nacheinander angeordnete, rotierende Flüssigkeitsfilme geleitet. Diese können sich in demselben Zylinder befinden. Es können auch mehrere vertikale Zylinder übereinander angeordnet sein, wobei der Durchmesser des oberen Zylinders jeweils grösser ist als jener des unteren Zylinders, so dass entlang der Innenwand des oberen Zylinders abfliessende Waschflüssigkeit nicht in den unteren Zylinder gelangt und die Waschflüssigkeiten aus verschiedenen Zylindern getrennt entsorgt werden können. Die Rotationsachse des Flüssigkeitsfilms kann auch horizontal sein, wodurch ein im wesentlichen vertikaler Film entsteht.

## Patentansprüche

1. Verfahren zum Entfernen von Verunreinigungen aus Gasen, insbesondere aus Luft, durch in Berührungbringen des Gases mit einer Waschflüssigkeit, dadurch gekennzeichnet, dass man den verunreinigten Gasstrom der einen Seite eines rotierenden und zur Rotationsachse senkrechten schirmförmigen Flüssigkeitsfilmes zuführt, den gereinigten Gasstrom von der anderen Seite des Flüssigkeitsfilmes abführt, und die den Film verlassende Flüssigkeit entlang der Innenwand der Gaszuführung als wanddeckenden Film abführt.

2. Verfahren nach Anspruch 1, dadurch gekennzeichnet, dass man einen aufsteigenden Gasstrom einem rotierenden Flüssigkeitsfilm mit vertikaler Rotationsachse zuführt.

3. Verfahren nach einem der Ansprüche 1 bis 2, dadurch gekennzeichnet, dass man Wasser als Waschflüssigkeit verwendet.

4. Verfahren nach Anspruch 1, dadurch gekennzeichnet, dass man Wasser mit filmbildungsfördernden Zusätzen als Waschflüssigkeit verwendet.

5. Verfahren nach einem der Ansprüche 1 bis 2, dadurch gekennzeichnet, dass man ein Lösungsmittel oder ein Lösungsmittelgemisch als Waschflüssigkeit verwendet.

6. Verfahren nach einem der Ansprüche 1 bis 5, dadurch gekennzeichnet, dass man eine Waschflüssigkeit verwendet, die mit den Verunreinigungen im Gasstrom chemisch reagierende Stoffe enthält.

7. Verfahren nach einem der Ansprüche 1 bis 6, dadurch gekennzeichnet, dass man einen schirmförmigen, den zugeführten Gasstrom deckenden, rotierenden Flüssigkeitsfilm erzeugt.

8. Verfahren nach einem der Ansprüche 1 bis 7, dadurch gekennzeichnet, dass man den Gasstrom mehreren aufeinanderfolgenden rotierenden Flüssigkeitsfilmen zuführt und die Waschflüssigkeit jedes einzelnen Films getrennt entsorgt.

9. Vorrichtung zur Erzeugung eines rotierenden Flüssigkeitsfilms zur Durchführung des Verfahrens nach einem der Ansprüche 1 bis 8, dadurch gekennzeichnet, dass sie eine Düse (1) mit einer tangentialen Zuführung (8) für die Waschflüssigkeit in den rotationssymmetrischen Düseninnenraum (3), der auf der Höhe der Zuführung (8) die Form eines Rotationsellipsoids besitzt und eine trompetenartig erweiterte Austrittsöffnung (6) für die Waschflüssigkeit aufweist.

10. Vorrichtung nach Anspruch 9, dadurch gekennzeichnet, dass der Innenraum (3) der Düse (1) im Anschluss an das Rotationsellipsoid verengt und auf die Auslassöffnung (6) der Düse erweitert ist.

11. Vorrichtung nach Anspruch 9 oder 10, dadurch gekennzeichnet, dass die Hauptachse (e) des Rotationsellipsoids und die Entfernung des kritischen Querschnitts (g) von dieser Achse etwa gleich lang sind.

12. Vorrichtung nach einem der Ansprüche 9 bis 11, dadurch gekennzeichnet, dass in der Düse (1) ein axial durchgehender sich über die Auslassöffnung (6) der Düse erstreckender, auf sein freies Ende hin sich erweiternder Stempel (13), angeordnet ist.

13. Vorrichtung nach Anspruch 12, dadurch gekennzeichnet, dass der Stempel (13) relativ zum Gehäuse (2) der Düse (1) in axialer Richtung bewegbar angeordnet ist.

14. Vorrichtung nach einem der Ansprüche 9 bis 13, dadurch gekennzeichnet, dass die Auslassöffnung (6) eine scharfe Kante aufweist.

## Claims

1. A method of removing impurities from gases, particularly from air, by bringing the gas into contact with a washing liquid, characterised in that the polluted gas stream is supplied to one side of a rotating umbrella-shaped liquid film which is perpendicular to the axis of rotation, the purified gas stream is drawn off from the other side of the liquid film, and the liquid leaving the film is drawn off, in the form of a wall-covering film, along the inner wall of the gas inlet.

2. A method according to claim 1, characterised in that a rising gas stream is supplied to a rotating liquid film with a vertical axis of rotation.

3. A method according to claim 1 or 2, characterised in that water is used as a washing liquid.

4. A method according to claim 1, characterised in that water with additives promoting film formation is used as a washing liquid.

5. A method according to claim 1 or 2, characterised in that a solvent or a mixture of solvents is used as a washing liquid.

6. A method according to any one of claims 1 to 5, characterised in that a washing liquid is used which contains substances reacting chemically with the impurities in the gas stream.

7. A method according to any one of claims 1 to 6, characterised in that an umbrella-shaped, rotating liquid film is produced which covers the gas stream supplied.

8. A method according to any one of claims 1 to 7, characterised in that the gas stream is supplied to a plurality of successive rotating liquid films and the washing liquid of each individual film is disposed of separately.

9. An apparatus for producing a rotating liquid film for carrying out the method according to any one of claims 1 to 8, characterised in that it comprises a nozzle (1) with a tangential inlet (8) for the washing liquid into the rotationally symmetrical interior (3) of the nozzle, which, at the height of the inlet (8), has the shape of an ellipsoid of revolution, and an outlet (6) widened out like a trumpet for the washing liquid.

10. An apparatus according to claim 9, characterised in that the interior (3) of the nozzle (1) becomes narrower following on the ellipsoid of revolution and is widened out at the outlet (6) of the nozzle.

11. An apparatus according to claim 9 or 10, characterised in that the major axis (e) of the ellipsoid of revolution and the distance of the critical cross-section (g) from this axis are substantially equal in length.

12. An apparatus according to any one of claims 9 to 11, characterised in that disposed in the nozzle (1) is an axially continuous plunger (13) which extends beyond the outlet (6) of the nozzle and widens out towards its free end.

13. An apparatus according to claim 12, characterised in that the plunger (13) is adapted for movement in the axial direction relative to the housing (2) of the nozzle (1).

14. An apparatus according to any one of claims 9 to 13, characterised in that the outlet (6) has a sharp edge.

**Revendications**

1. Procédé pour éliminer des impuretés dans des gaz, notamment de l'air, grâce à la mise en contact du gaz avec un liquide de lavage, caractérisé en ce qu'on introduit le courant de gaz pollué par des impuretés d'un côté, d'une pellicule rotative de liquide formant écran, perpendiculaire à l'axe de rotation, qu'on évacue le courant de gaz purifié, sur l'autre côté de la pellicule de liquide et qu'on évacue le liquide quittant la pellicule, le long de la paroi intérieure de l'élément d'amenée du gaz, sous la forme d'une pellicule recouvrant la paroi.

2. Procédé selon la revendication 1, caractérisé en ce qu'on envoie un courant de gaz montant à une pellicule rotative de liquide, dont l'axe de rotation est vertical.

3. Procédé selon l'une des revendications 1 ou 2, caractérisé en ce qu'on utilise de l'eau comme liquide de lavage.

4. Procédé selon la revendication 1, caractérisé en ce qu'on utilise de l'eau comportant des adjuvants favorisant la formation d'une pellicule, en tant que liquide de lavage.

5. Procédé selon la revendication 1 ou 2, caractérisé en ce qu'on utilise un solvant ou un mélange de solvants comme liquide de lavage.

6. Procédé selon l'une des revendications 1 à 5, caractérisé en ce qu'on utilise un liquide de lavage, qui contient des substances réagissant chimiquement avec les impuretés présentes dans le courant de gaz.

7. Procédé selon l'une des revendications 1 à 6, caractérisé en ce qu'on produit une pellicule rotative de liquide formant écran, qui enveloppe le courant de gaz introduit.

8. Procédé selon l'une des revendications 1 à 7, caractérisé en ce qu'on dirige le courant de gaz vers plusieurs pellicules rotatives de liquide, successives, et qu'on évacue séparément le liquide de lavage de chaque pellicule individuelle.

9. Dispositif pour produire une pellicule rotative de liquide pour la mise en oeuvre du procédé selon l'une des revendications 1 à 8, caractérisé en ce qu'il possède une buse (1) comportant un système tangentiel (8) d'amenée du liquide de lavage dans l'espace intérieur (3) de la buse, à symétrie de révolution, qui possède la forme d'un ellipsoïde de révolution, à la hauteur du système d'amenée (8) et comporte une ouverture de sortie (6) s'élargissant en forme de trompette, pour le liquide de lavage.

10. Dispositif selon la revendication 9, caractérisé en ce que l'espace intérieur (3) de la buse (1) se rétrécit en aval de l'ellipsoïde de révolution et s'élargit en direction de l'ouverture de sortie (6) de la buse.

11. Dispositif selon la revendication 9 ou 10, caractérisé en ce que le grand axe (e) de l'ellipsoïde de révolution et la distance entre la section transversale critique (g) et cet axe possèdent approximativement les mêmes dimensions.

12. Dispositif selon l'une des revendications 9 a 11, caractérisé en ce que dans la buse (1) se trouve disposé un piston axial traversant (13), qui s'étend au-dessus de l'ouverture de sortie (6) de la buse et qui s'élargit en direction de son extrémité libre.

13. Dispositif selon la revendication 12, caractérisé en ce que le piston (13) est disposé de manière à être déplaçable dans la direction axiale par rapport au boîtier (2) de la buse (1).

14. Dispositif selon l'une des revendications 9 à 13, caractérisé en ce que l'ouverture de sortie (6) possède une arête vive.

Fig 1

Fig 2